# EUROPEAN PATENT SPECIFICATION

(11) **EP 4 513 627 B1**
(45) Date of publication and mention of the grant of the patent: **28.10.2026**
(21) Application number: 23386079.0
(22) Date of filing: 25.08.2023
(51) Int. Cl.: H01M 10/615, H01M 10/654, H01M 10/6571, H01M 10/658

(54) **BATTERY ELECTRODE WITH INTEGRATED HEATING ELEMENT**
BATTERIEELEKTRODE MIT INTEGRIERTEM HEIZELEMENT
ÉLECTRODE DE BATTERIE AVEC ÉLÉMENT CHAUFFANT INTÉGRÉ

(43) Date of publication of application: 26.02.2025
(73) Proprietor: Innovative Energy Materials Technologies Private Company, 67100 Xanthi (GR)
(72) Inventor: Selinis, Petros, 56238 Thessaloniki (GR); Farmakis, Filippos, 67131 Xanthi (GR)
(74) Representative: Panagiotidou, Effimia

(56) References cited:
- CN-A- 108 832 171
- CN-A- 108 879 028
- CN-A- 113 140 831
- CN-A- 116 435 520
- DE-A1- 102013 221 747
- DE-A1- 102016 214 337
- DE-A1- 102018 123 910
- DE-A1- 102018 210 417
- DE-A1- 2 062 996
- GB-A- 1 306 829
- KR-A- 20230 004 111
- US-A- 3 623 916
- US-A1- 2013 127 473
- US-A1- 2014 113 166
- US-A1- 2015 104 681
- US-A1- 2022 045 382
- US-A1- 2022 247 015

## Description

### Field of invention

The present invention relates to a battery electrode comprising an active material in contact with a current collector, wherein the active material comprises a heating element, wherein the heating element comprises at least a wire coated by an insulating material, characterized in that the heating element is embedded in the active material and is in direct contact with the current collector

### Background of the invention

A battery is a source of electric power comprising one or more electrochemical cells with external connections for powering electrical devices. When a battery is supplying power, its positive terminal is the cathode and its negative terminal is the anode. The terminal marked negative is the source of electrons that will flow through an external electric circuit to the positive terminal. When a battery is connected to an external electric load, a redox reaction converts high-energy reactants to lower-energy products, and the free-energy difference is delivered to the external circuit as electrical energy.

Lithium-ion batteries (LiBs) are a type of rechargeable batteries which use the reversible reduction of lithium ions to store energy. The anode of a conventional lithium-ion cell is typically made out of graphite, a form of carbon. The cathode is typically a metal oxide. The electrolyte inside the battery is typically a lithium salt in an organic solvent. The anode and cathode are prevented from shorting by a separator. The anode and the cathode are connected with the external circuit with the aid of metal foil called current collector.

LiBs are commonly used in a large variety of applications, including consumer electronics, stationary storage systems and electric vehicles.

LiBs provide several advantages, compared to other energy storage technologies, including high energy and power density, long cycle life and safety. However, LiBs have an optimal operational temperature range between 10°C and 30°C, while their performance, stability, safety, and lifetime are poor at low temperatures below 0°C. The reasons behind these drawbacks originate from the nature of anode and cathode active materials (i.e. the materials that predominantly compose the anode electrode and/or the cathode electrode), along with the composition of electrolyte solutions (i.e. the electrolyte inside the battery). From the perspective of active materials, the most common problems arise from the dramatic increase in the resistances, especially the charge transfer resistance, and the decrease of lithium-ion diffusivity by more than one order of magnitude. As a result, when LiBs operate at subzero temperature, their energy and power capability is significantly lower, while their lifetime is shortened, due to large resistances inside the lithium-ion cell, severely affecting the stability of the active materials. Especially during charging at low temperatures, lithium can be deposited on the surface of the anodic active material, forming dendrites that can potentially lead to short-circuits, and, consequently, compromise the safety of the battery system.

In order to address the low-temperature issue of LiBs, several strategies have been proposed, following two main approaches.

One approach is focused on the battery material level, by optimizing the properties of active materials of the anode and cathode electrodes, or the electrolyte solution, to improve the electrochemical performance and stability of the system at lower temperatures. Several promising materials have been fabricated at lab-scale quantities, but most of them suffer from high fabrication complexity, thus requiring several years to achieve industrial compatibility.

Another approach is focused on the battery operational level, by pre-heating the batteries, using an external or internal heat source, to increase the temperature of the battery system from a low ambient temperature to a higher target temperature. External heating methods, such as air, liquid, and heat pump heating, have already been incorporated in commercial electric vehicles. However, external heating methods face the main challenges of low heat transfer rate and low heating efficiency, leading to prolonged heating times and increased energy consumption, in addition to high temperature differences within the battery cells and modules/packs (as known, a module is formed by connecting multiple battery cells, providing them with a mechanical support structure and thermal interface and attaching terminals; a pack is formed by connecting multiple modules with sensors and a controller and then housing the unit in a case).

Internal heating methods, such as internal self-heating and alternating current heating, have managed to address these issues, by generating heat inside the lithium-ion cell. A self-heating battery (SHLB), proposed by Wang et al. in US9502708B2, which incorporates a thin nickel foil with certain electrical resistance as the heating element, placed between the electrode stack, has shown promising heating results. Prior art also includes other internal heating methods, which use a heat generation unit, placed on top and/or bottom of the electrode stack (US2009087723A1), or switch between electrode terminals with different electrical resistances (JP2010205710A).
DE 20 62 996 A1 discloses a heatable accumulator with plates supported by the heating elements. Heating elements are mounted inside the battery, acting as (part) supports for the electrodes but are electrically insulated from them.
DE 10 2018 123910 A1 discloses a battery, in particular in Li-ion technology, with heatable electrolyte.
CN 116 435 520 A discloses a self-heating composite current collector and preparation method and application thereof, whereby the current collector comprises a heating layer, two insulating flame-retardant layers and a metal conductive layer.
US 2022/247015 A1 discloses an internally heatable battery system and an electric vehicle comprising such battery.

Despite the fact that several internal heating methods have been proposed, improving the pre-heating process in comparison with external heating methods, in terms of heating duration and energy consumption, these methods still face several limitations, regarding heating efficiency, temperature uniformity and safety. High-rate operations in the case of SHLB may accelerate battery degradation, while alternating current heating requires an external AC power source.

The possibility of having a heating element, in order to address the aforementioned low-temperature issue of LiBs, that efficiently overcomes the aforementioned limitations regarding heating efficiency, temperature uniformity and safety, is therefore strongly needed by applications operating at low temperature environments.

### Summary of the invention

One object of the present invention is therefore to provide a heating element able to address the aforementioned LiBs low-temperature issue, by overcoming the aforementioned limitations regarding heating efficiency, temperature uniformity and safety.

This object is achieved by a battery electrode and a battery comprising this battery electrode as outlined in the enclosed claims, the definitions of which form an integral part of the present description.

### Brief description of the Figures

The invention will be better understood from the following detailed description of its preferred embodiments, made by way of example and therefore not limiting with reference to the accompanying Figures, in which:
- Figure 1 shows a battery electrode according to the present invention, wherein the active material is integrated with wires and the wires are connected to two nickel tabs to supply them with the required input power;
- Figure 2A shows a graphic about the temperature on the electrode active material of the present invention while heating up from an initial temperature of -40°C, using integrated wires (as heating element) of the present invention;
- Figure 2B shows a thermal image of the battery electrode of the present invention during room-temperature heating up test.

In the accompanying Figures, equal or similar elements will be indicated by the same numerical references.

### Detailed description of the invention

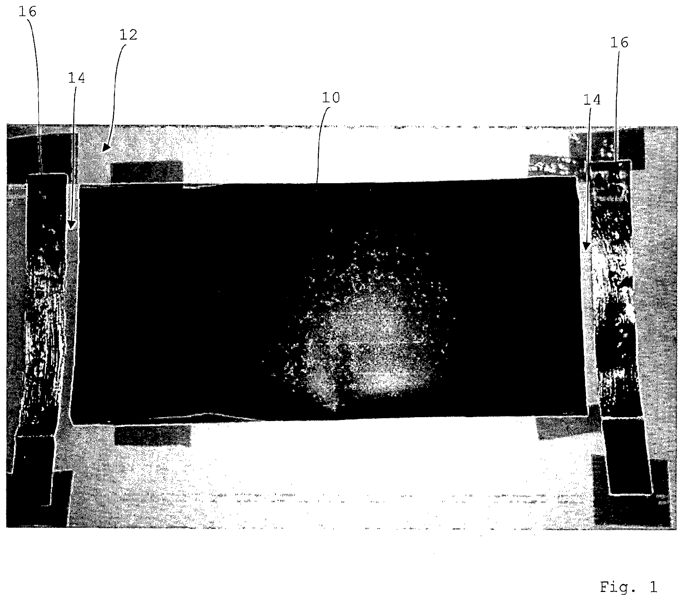

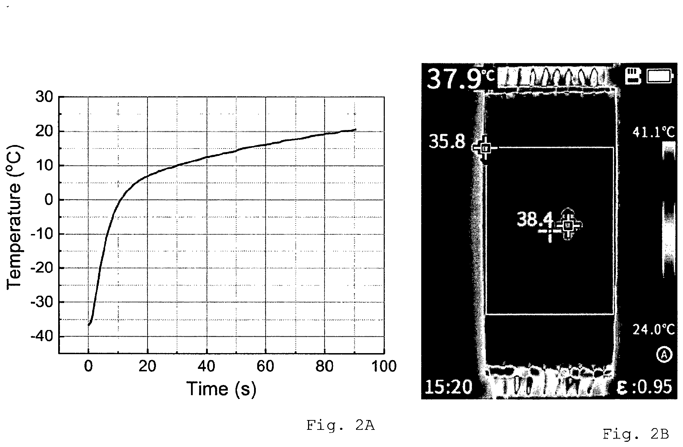

With reference to Figure 1 and Figures 2A and 2B, is shown a first object of the present invention that concerns a battery electrode comprising an active material 10 in contact with a current collector, wherein the active material 10 and/or the current collector comprises a heating element 12, wherein the heating element 12 comprises at least a wire 14 coated by an insulating material, wherein the heating element 12 is either integrated inside the active material 10 and/or is in direct contact with the current collector. Preferably, the battery electrode is an anode electrode and/or a cathode electrode.

With reference to the present description and to the enclosed claims, the term "battery electrode" refers to, as known to a skilled person in the art, an electrode of a battery, i.e. an anode and/or a cathode, which together (anode and cathode) facilitates the flow of electric charge. The anode is the negative electrode, where oxidation (loss of electrons) takes place, the cathode is, instead, the positive electrode, where reduction, gain of electrons, occurs.

With reference to the present description and to the enclosed claims, the term "active material" refers to the material that preferably and predominantly composes the battery electrode and therefore is inside the battery. Preferably the active material 10 is a material with a high electrical conductivity. According to the present invention, the active material 10 preferably comprises at least one of: lithium, graphite, silicon, graphite-silicon composite, graphene, lithium iron phosphate (such as LiFePO₄ - LFP), cobalt-based materials (such as LiCoO₂ - LCO), manganese-based materials (such as LiMn₂O₄ - LMO, or LiNi_{0.5}Mn_{1.5}O₄ - LNMO), lithium nickel manganese cobalt oxides (such as LiNiₓMn_{y}Co_{1-x-y}O₂ - NMC), or mixtures thereof. More preferably also comprises at least a binder and at least an additive that acts as conductive agent. The preferable presence of at least a binder and at least an additive that acts as conductive agent provides the advantage of improving the electrical and mechanical properties of the active material. More preferably, according to the present invention, the active material 10 comprises graphite. Graphite is generally the most commonly used electrode active material due to its high electrical conductivity, low cost, and stable structure.

With reference to the present description and to the enclosed claims, the term "current collector" refers to an element of the battery that is in direct contact with the active material 10 and preferably forms one outer surface part of the battery, in particular the outer surface part which maintains contact with the active material 10 that is placed inside the battery. As known by a skilled person in the art, current collector is preferably a component that connects electrochemical system and external electrical circuits. The current collector works in fact as electrical conductor between the electrode and external circuits as well as a support for the coating of the active material 10 of the anode and/or the cathode. Preferably the current collector is a material with a high electrical conductivity.

According to the present invention, the current collector preferably comprises at least one of: copper, aluminum, nickel, titanium, stainless steel, carbon, or mixtures thereof. More preferably, the current collector comprises copper or aluminum (furthermore preferably, copper for the current collector of the anode electrode and aluminum for the current collector of the cathode electrode).

According to an embodiment of the present invention, the active material 10 and/or the current collector is preferably in a form selected from: film, foil, mesh, foam, 3D-structure. More preferably, the active material 10 and/or the current collector is in a film form.

With reference to the present description and to the enclosed claims, the term "heating element" refers to an element that converts electrical energy into heat through the process of Joule heating. Electric current through the heating element 12 encounters resistance, resulting in heating of the element. Unlike the Peltier effect, this process is independent of the direction of current.

With reference to the present description and to the enclosed claims, the term "wire" refers to a flexible strand of metal. According to the present invention, the wire 14 is preferably cylindrical in geometry, but can also be made in square, hexagonal, flattened rectangular, or another cross-sections geometry.

According to an embodiment of the present invention the wire 14 preferably comprises at least one of: nickel/chrome alloy, copper/nickel alloy (preferably such as constantan, manganin), nickel-based alloy (preferably comprising cobalt, chromium, molybdenum, tungsten, iron, silicon, manganese, carbon, aluminum, titanium), nickel-chromium-based alloy, iron-chromium-aluminum-based alloy, stainless steel, or mixtures thereof. More preferably, the wire 14 comprises nickel/chrome alloy. Preferably, the wire 14 has a diameter of less than 50 µm. So, the strands of metal of the wire 14, according to the invention, preferably comprise a nickel/chrome alloy. Preferably the metal or metal alloy of the wire 14 is a metal or metal alloy with a high electrical resistivity, high mechanical strength, low temperature coefficient of resistance and a high melting point.

With reference to the present description and to the enclosed claims, the term "insulating material" refers to a material that does not conduct electric current. Insulating materials are for example glass, paper, air and plastics. Insulating materials are for example used in electrical devices, such as batteries, to ensure that the battery components do not interact electrically with the element insulated by the insulating material.

According to an embodiment of the present invention the insulating material preferably comprises at least one of: polyimide, polypropylene, polyamide, polyesterimide, polyester, polyurethane, thermoplastic resins that are polyvinyl formals, or mixtures thereof. Polyvinyl formals are polymers formed from polyvinyl alcohol and formaldehyde as copolymers with polyvinyl acetate. More preferably the insulating material comprises polyimide.

According to the present invention, the heating element is embedded in the active material and is in direct contact with the current collector. So, according to the present invention, the heating element 12 is therefore in direct contact both with the current collector and the active material 10, being arranged in order to directly contact both the current collector and the active material 10; for example, by being arranged between the current collector and the active material 10.

Preferably and advantageously, the heating element 12, through the Joule effect, transmits and spreads heat throughout the entire mass of the active material 10 in a uniform manner.

According to an embodiment of the present invention, the heating element 12 is preferably in form of multiple coated wires 14 parallel to each other, or in form of coated wire 14 with a meander-like arrangement (more preferably with a serpentine like arrangement), or in a form of a net or a grid of coated wires 14. These types of arrangement and the features of having the heating element 12 either integrated inside the active material 10 and/or in direct contact with the current collector allow for uniform heat distribution in the active material 10.

With reference to Figure 1 and Figures 2A and 2Bis shown a second object of the present invention that concerns a battery comprising the battery electrode according to what is described above.

Preferably, the battery of the present invention comprises at least an anode electrode and/or a cathode electrode according to the present invention. Preferably, the anode electrode and the cathode electrode are separated by a separator. Preferably, the anode electrode, the cathode electrode and the separator are dipped in (or wetted by) a liquid electrolyte. Preferably, the separator is a porous film that allows the passage of the ions of the electrolyte. Preferably, the anode electrode and/or the cathode electrode is in contact with a current collector, i.e. an element of the battery that preferably is in direct contact with the anode electrode and/or the cathode electrode and preferably forms one outer surface part of the battery. As known by a skilled person in the art, current collectors are preferably components that connect electrochemical system and external circuits. The current collector works in fact as electrical conductor between the anode electrode and/or cathode electrode and external circuits as well as a support for the coating of the electrode. Preferably, the current collector is made of a material with a high electrical conductivity. More preferably, the current collector comprises copper or aluminum. Other possible current collector can be selected from: aluminum-based material, copper-based material, nickel-based material, titanium-based material, stainless steel and carbon-based material or mixtures thereof.

According to an embodiment of the battery of the present invention, the anode electrode and/or the cathode electrode and/or the current collector is preferably in a form selected from: film, foil, mesh, foam, 3D-structure. More preferably, the anode electrode and/or the cathode electrode and/or the current collector is in a film form.

According to an embodiment of the battery of the present invention, the coated wire 14 of the heating element 12 is preferably electrically connected to at least a metallic tab 16. Preferably the metallic tab 16 is selected from: nickel tab, aluminum tab, copper tab, tin tab, mixtures thereof tab. More preferably is a nickel tab 16. Preferably and advantageously, the metallic tab 16 is used to supply the input power. Thus, when electric current passes through the wire 14 of the heating element 12 circuit, the wire 14 heats up due to Joule effect, also heating up the active material 10 of the battery electrode. In this way, the active material 10 can be heated from low temperatures, such as -20°C or -40°C up to a target temperature that is inside the optimal operational temperature range of batteries. Advantageously, since the heating element 12 of the present invention is preferably placed directly inside the electrode active material 10, heating is conducted in only few seconds, requiring low input power (< 60 mW/cm²) and consuming low amounts of energy, while achieving very high temperature uniformity across the entire mass of the active material 10 of the battery electrode.

According to another embodiment of the battery of the present invention, one end of the coated wire 14 of the heating element 12 is preferably electrically connected to at least a metallic tab 16 and the other end of the coated wire 14 of the heating element 12 is preferably electrically connected to a current collector.

According to an embodiment of the battery of the present invention, the battery is selected from: lithium-ion battery, sodium-ion battery, solid-state battery, lithium-sulfur battery. More preferably, the battery is a lithium-ion battery.

Batteries, and in particular LiBs, currently on the market have the drawback of performing poorly at low temperature conditions, with limited available energy and power, charging may cause lithium plating and safety issues. The battery electrode of the present invention, advantageously having an integrated heating element 12 preferably inside the active material 10 of the battery electrode, provides numerous advantages, such as: heating the active material 10 of each battery electrode in a uniform, safe and energy-saving manner; consuming low quantity of energy; requiring a short amount of time in order to heat the battery electrode in a uniform manner; heating the battery electrode with high temperature and uniformity; allowing the integration of the battery electrode of the present invention in both conventional and innovative battery. Advantageously, the battery electrode of the present invention provides heating the active material 10 of the battery electrode from -40°C to 20°C in less than 60 s. Thus, improving the safety (for example, no lithium plating during charge), the highest availability of energy and power and the long cycle life of the battery.

According to an embodiment of the present invention, the heating element 12 is preferably either integrated inside the active material 10 and/or in direct contact with the current collector during the electrode fabrication process (preferably, before or right after coating the current collector with the active material 10). Preferably, the heating element 12 is either integrated inside the active material 10 and/or in direct contact with the current collector by 3D-printing or by inkjet printing or by other method, in order to print the coated wire 14 either integrated inside the active material 10 and/or in direct contact with the current collector.

According to an embodiment of the present invention, the battery of the present invention preferably can also comprise single and/or double-sided battery electrodes according to the present invention. As known by the person skilled in the art, a single-sided battery electrode is a battery electrode in which the battery electrode comprises the active material 10 in contact with the current collector, wherein the active material 10 and the current collector are in contact by only one side of them. A double-sided battery electrode is, instead, a battery electrode in which the battery electrode comprises at least two active material 10 between which there is the current collector; so, in the double-sided battery electrode the current collector is in contact, by one of its side, with one active material 10 and in contact, by another of its side, with the second active material 10; resulting therefore that the current collector is in contact with both active materials 10.

According to an embodiment of the present invention, the heating element 12 is preferably comprised in the aforementioned single-sided battery electrode and in particular is comprised in the active material 10 and/or the current collector of the single-sided battery electrode. According to another embodiment of the present invention, the heating element 12 is preferably comprised in the aforementioned double-sided battery electrode and in particular is comprised either in one active material 10 and/or the current collector of double-sided battery electrode or is comprised in both the active materials 10 and/or the current collector of double-sided battery electrode.

According to an embodiment of the present invention, the battery of the present invention preferably comprises at least one battery electrode of the present invention, acting either as anode electrode or as cathode electrode.

According to another embodiment of the present invention, the battery of the present invention preferably comprises a plurality of pairs of anode electrode and cathode electrode (in which each pair of anode electrode and cathode electrode forms a single unit cell) and in these pairs of electrodes at least one electrode is the battery electrode of the present invention.

According to another embodiment of the present invention, a plurality of these single unit cells is preferably connected together in order to create a module.

According to another embodiment of the present invention, a plurality of these modules is preferably connected together in order to create a pack.

According to an embodiment of the present invention, preferably at least one of the battery electrodes comprised in one of the aforementioned single unit cells and/or modules and/or packs comprise at least one of the heating elements 12 of the present invention.

Advantageously, the heating element 12 of the present invention, therefore addresses the aforementioned LiBs low-temperature issue, by overcoming the aforementioned limitations regarding heating efficiency, temperature uniformity and safety. Therefore, the battery electrode and the battery comprising the battery electrode of the present invention are able to perform with stability, safety, and lifetime even at low temperatures below 0°C.

### Examples

One preferred embodiment of the present invention is now reported, given by way of non-limiting example.

### Example: heating element integrated inside the active material and on top of the current collector.

The active material 10 is a film of graphite, the current collector is a copper foil. As shown in Figure 1, the heating element 12 comprises of thin (< 50µm diameter) *Nichrome* (i.e. nickel/chrome alloys) wires 14, coated by an insulating material of polyimide, which are placed on top of the anode's current collector (a copper foil) and integrated inside the film of active material 10 (graphite). The wires 14 are electrically connected to two nickel tabs 16 that are used to supply the input power. Thus, when electric current passes through the heating element 12 circuit, the wires 14 heat up due to Joule heating, also heating up the graphite active material 10. In this way, the graphite anode electrode can be heated from low temperatures, such as -20°C or -40°C, up to a target temperature that is inside the optimal operational temperature range of LiBs. Since the heating element 12 is placed directly inside the anode active material 10, heating is conducted in only few seconds, requiring low input power (< 60 mW/cm²) and consuming low amounts of energy, while achieving very high temperature uniformity across the anodic electrode, as shown in Figure 2A and Figure 2B.

## Claims

1. Battery electrode comprising an active material (10) in contact with a current collector, wherein the active material (10) comprises a heating element (12),
wherein
the heating element (12) comprises at least a wire (14) coated by an insulating material,
**characterized in that**
the heating element (12) is embedded in the active material (10) and is in direct contact with the current collector.

2. Battery electrode according to claim 1, wherein the battery electrode is an anode electrode and/or a cathode electrode.

3. Battery electrode according to claim 1 or 2, wherein the wire (14) comprises at least one of: nickel/chrome alloy, copper/nickel alloy, nickel-based alloy, nickel-chromium-based alloy, iron-chromium-aluminum-based alloy, stainless steel, or mixtures thereof.

4. Battery electrode according to any one of claims 1 to 3, wherein the wire (14) has a diameter of less than 50 µm.

5. Battery electrode according to any one of claims 1 to 4, wherein the insulating material comprises at least one of: polyimide, polypropylene, polyamide, polyesterimide, polyester, polyurethane, thermoplastic resins that are polyvinyl formals, or mixtures thereof.

6. Battery electrode according to any one of claims 1 to 5, wherein the heating element (12) is in form of multiple coated wires parallel to each other, or in form of coated wire with a meander-like arrangement, or in a form of a net, or a grid of coated wires.

7. Battery electrode according to any one of claims 1 to 6, wherein the active material (10) comprises at least one of: lithium, graphite, silicon, graphite-silicon composite, graphene, lithium iron phosphate, cobalt-based materials, manganese-based materials, lithium nickel manganese cobalt oxides, or mixtures thereof.

8. Battery electrode according to any one of claims 1 to 7, wherein the current collector comprises at least one of: copper, aluminum, nickel, titanium, stainless steel, carbon, or mixtures thereof.

9. Battery electrode according to any one of claims 1 to 8, wherein the active material (10) and/or the current collector is in a form selected from: film, foil, mesh, foam, 3D-structure.

10. Battery comprising the battery electrode according to any one of claims 1 to 9.

11. Battery according to claim 10, wherein the coated wire (14) of the heating element (12) is electrically connected to at least a metallic tab (16).

12. Battery according to claim 11, wherein the metallic tab (16) is selected from: nickel tab, aluminum tab, copper tab, tin tab, mixtures thereof tab.

13. Battery according to any one of claims 10 to 12, wherein the battery is selected from: lithium-ion battery, sodium-ion battery, solid-state battery, lithium-sulfur battery.

14. Battery according to claim 13, wherein the battery is a lithium-ion battery.

## Patentansprüche

1. Batterieelektrode, umfassend ein Aktivmaterial (10), das in Kontakt mit einem Stromkollektor steht, wobei das Aktivmaterial (10) ein Heizelement (12) umfasst,
wobei
das Heizelement (12) mindestens einen Draht (14) umfasst, der mit einem isolierenden Material beschichtet ist,
**dadurch gekennzeichnet, dass**
das Heizelement (12) in das Aktivmaterial (10) eingebettet ist und in direktem Kontakt mit dem Stromkollektor steht.

2. Batterieelektrode nach Anspruch 1, **dadurch gekennzeichnet, dass** die Batterieelektrode eine Anodenelektrode und/oder eine Kathodenelektrode ist.

3. Batterieelektrode nach Anspruch 1 oder 2, **dadurch gekennzeichnet, dass** der Draht (14) mindestens eines der folgenden Materialien umfasst: Nickel-Chrom-Legierung, Kupfer-Nickel-Legierung, nickelbasierte Legierung, nickel-chrombasierte Legierung, Eisen-Chrom-Aluminium-basierte Legierung, Edelstahl oder Mischungen davon.

4. Batterieelektrode nach einem der Ansprüche 1 bis 3, **dadurch gekennzeichnet, dass** der Draht (14) einen Durchmesser von weniger als 50 µm aufweist.

5. Batterieelektrode nach einem der Ansprüche 1 bis 4, **dadurch gekennzeichnet, dass** das Isoliermaterial mindestens eines der folgenden umfasst: Polyimid, Polypropylen, Polyamid, Polyesterimid, Polyester, Polyurethan, thermoplastische Harze auf Basis von Polyvinylformal oder Mischungen davon.

6. Batterieelektrode nach einem der Ansprüche 1 bis 5, **dadurch gekennzeichnet, dass** das Heizelement (12) in Form mehrerer parallel zueinander angeordneter beschichteter Drähte oder in Form eines beschichteten Drahtes mit meanderförmiger Anordnung oder in Form eines Netzes oder eines Gitters aus beschichteten Drähten ausgebildet ist.

7. Batterieelektrode nach einem der Ansprüche 1 bis 6, **dadurch gekennzeichnet, dass** das Aktivmaterial (10) mindestens eines der folgenden umfasst: Lithium, Graphit, Silizium, Graphit-Silizium-Komposit, Graphen, Lithiumeisenphosphat, kobaltbasierte Materialien, manganbasierte Materialien, Lithium-Nickel-Mangan-Kobalt-Oxide oder Mischungen davon.

8. Batterieelektrode nach einem der Ansprüche 1 bis 7, **dadurch gekennzeichnet, dass** der Stromkollektor mindestens eines der folgenden umfasst: Kupfer, Aluminium, Nickel, Titan, Edelstahl, Kohlenstoff oder Mischungen davon.

9. Batterieelektrode nach einem der Ansprüche 1 bis 8, **dadurch gekennzeichnet, dass** das Aktivmaterial (10) und/oder der Stromkollektor in einer aus Film, Folie, Netz, Schaum oder 3D-Struktur ausgewählten Form ausgebildet ist.

10. Batterie, umfassend die Batterieelektrode nach einem der Ansprüche 1 bis 9.

11. Batterie nach Anspruch 10, **dadurch gekennzeichnet, dass** der beschichtete Draht (14) des Heizelements (12) elektrisch mit mindestens einer metallischen Lasche (16) verbunden ist.

12. Batterie nach Anspruch 11, **dadurch gekennzeichnet, dass** die metallische Lasche (16) ausgewählt ist aus: Nickellasche, Aluminiumlasche, Kupferlasche, Zinnlasche oder Mischungen davon.

13. Batterie nach einem der Ansprüche 10 bis 12, **dadurch gekennzeichnet, dass** die Batterie ausgewählt ist aus: Lithium-Ionen-Batterie, Natrium-Ionen-Batterie, Festkörperbatterie, Lithium-Schwefel-Batterie.

14. Batterie nach Anspruch 13, **dadurch gekennzeichnet, dass** es sich bei der Batterie um eine Lithium-Ionen-Batterie handelt.

## Revendications

1. Électrode de batterie comprenant un matériau actif (10) en contact avec un collecteur de courant, où le matériau actif (10) comprend un élément chauffant (12),
où
l'élément chauffant (12) comprend au moins un fil (14) revêtu d'un matériau isolant,
**caractérisé en ce que**
l'élément chauffant (12) est intégré dans le matériau actif (10) et est en contact direct avec le collecteur de courant.

2. Électrode de batterie selon la revendication 1, où l'électrode de batterie est une électrode d'anode et/ou une électrode de cathode.

3. Électrode de batterie selon la revendication 1 ou 2, où le fil (14) comprend au moins l'un des éléments suivants: alliage nickel-chrome, alliage cuivre-nickel, alliage à base de nickel, alliage à base de nickel-chrome, alliage à base de fer-chrome-aluminium, acier inoxydable ou leurs mélanges.

4. Électrode de batterie selon l'une quelconque des revendications de 1 à 3, où le fil (14) a un diamètre inférieur à 50 µm.

5. Électrode de batterie selon l'une quelconque des revendications de 1 à 4, où le matériau isolant comprend au moins l'un des éléments suivants: polyimide, polypropylène, polyamide, polyesterimide, polyester, polyuréthane, résines thermoplastiques qui sont des formals polyvinyliques ou leurs mélanges.

6. Électrode de batterie selon l'une quelconque des revendications de 1 à 5, où l'élément chauffant (12) est sous la forme de plusieurs fils revêtus parallèles les uns aux autres, ou sous la forme d'un fil revêtu disposé en méandres, ou sous la forme d'un filet ou d'une grille de fils revêtus.

7. Électrode de batterie selon l'une quelconque des revendications de 1 à 6, où le matériau actif (10) comprend au moins l'un des éléments suivants: lithium, graphite, silicium, composite graphite-silicium, graphène, phosphate de fer et de lithium, matériaux à base de cobalt, matériaux à base de manganèse, oxydes de lithium, de nickel, de manganèse et de cobalt ou leurs mélanges.

8. Électrode de batterie selon l'une quelconque des revendications de 1 à 7, où le collecteur de courant comprend au moins l'un des éléments suivants: cuivre, aluminium, nickel, titanium, acier inoxydable, carbone ou leurs mélanges.

9. Électrode de batterie selon l'une quelconque des revendications de 1 à 8, où le matériau actif (10) et/ou le collecteur de courant sont sous une forme choisie parmi: un film, une feuille, un treillis, une mousse, une structure 3D.

10. Batterie comprenant l'électrode de batterie selon l'une quelconque des revendications de 1 à 9.

11. Batterie selon la revendication 10, où le fil revêtu (14) de l'élément chauffant (12) est connecté électriquement à au moins une patte métallique (16).

12. Batterie selon la revendication 11, où la patte métallique (16) est choisie parmi: une patte en nickel, une patte en aluminium, une patte en cuivre, une patte en étain ou une tab de leurs mélanges.

13. Batterie selon l'une quelconque des revendications de 10 à 12, où la batterie est choisie parmi: une batterie lithium-ion, une batterie sodium-ion, une batterie solide, une batterie lithium-soufre.

14. Batterie selon la revendication 13, où la batterie est une batterie lithium-ion.
